# EUROPÄISCHE PATENTSCHRIFT

(11) **EP 0 748 580 B1**
(45) Veröffentlichungstag und Bekanntmachung des Hinweises auf die Patenterteilung: **03.02.1999**
(21) Anmeldenummer: 96105695.9
(22) Anmeldetag: 11.04.1996
(51) Int. Cl.: A01C 7/08

(54) **Verteilerkopf für eine pneumatische Sämaschine**
Pneumatic sowing machine distributor head
Tête distributrice pour semoir pneumatique

(30) Priorität: 17.06.1995 DE 19522060; 17.10.1995 DE 19538586
(43) Veröffentlichungstag der Anmeldung: 18.12.1996
(60) Teilanmeldung: 97111410.3
(73) Patentinhaber: Amazonen-Werke H. Dreyer GmbH & Co. KG, D-49205 Hasbergen (DE)
(72) Erfinder: Gattermann, Bernd, Dipl.-Ing., 27798 Hude (DE); Siefken, Claus, 27777 Ganderkesee (DE)

(56) Entgegenhaltungen:
- EP-A- 0 102 333
- DE-A- 1 557 913
- DE-C- 3 805 148
- FR-A- 1 569 181
- US-A- 4 473 016
- US-A- 4 989 784

## Beschreibung

Die Erfindung betrifft einen Verteilerkopf für eine pneumatische Sämaschine gemäß des Oberbegriffes des Patentanspruches 1.

Ein derartiger Verteilerkopf ist beispielsweise durch die EP 87 114 374 bekannt. Dieser Verteilerkopf weist ein Deckelelement und eine Bodenplatte auf, zwischen welche die Abzweige eingeklemmt sind und die Seitenflächen benachbarter Abzweige abdichtend aneinander anlegen. Da die Seitenflächen der Abzweige flexibel ausgebildet sind, ist es möglich, eine unterschiedliche Anzahl von Abzweigen zwischen dem Deckelelement und dem Bodenelement anzuordnen, so daß je entsprechend der an der Sämaschine angebrachten Säscharen Abzweige an dem Verteilerkopf angebracht werden können.

Durch den Prospekt Accord mit Druckvermerk D75 40 10-02 91 ist ein Verteilerkopf bekannt, in welchem Deckelelemente mit Absperrvorrichtungen einsetzbar sind, so daß mehr oder weniger an dem Verteilerkopf angeordnete Abzweigleitungen freigegeben oder abgedeckt werden können. Desweiteren ist durch diesen Prospekt es bekannt, verschiedenen Verteilerköpfe mit unterschiedlichen Anzahl von Abzweigungen einzusetzen.

Die DE-A-15 57 913 beschreibt einen Verteilerkopf für pneumatische Sämaschinen mit einem flachen Deckelelement und einem Unterteil zur Anbringung auf einem Steigrohr. Im Inneren des Deckelelementes ist oberhalb des Steigrohres ein rotierender Drehkopf angeordnet. Der Drehkopf weist mehrere nebeneinander angeordnete Öffnungen auf. Das durch das Steigrohr mit dem Luftstrom geförderte Saatgut wird in dem Drehkopf umgelenkt und den Öffnungen 72 zugeführt. Von den Öffnungen 72 gelangt das Saatgut über die Öffnungen 60 zu den einzelnen Saatgutleitungen. Eine Prallverteilung des Saatgutes an dem Deckelelement auf die einzlenen Leitungen findet nicht statt.

Der Erfindung liegt die Aufgabe zugrunde, auf einfache Weise einen Verteilerkopf zu schaffen, der in einfacher Weise an die unterschiedlichen Einsatzbedingungen angepaßt bzw. für unterschiedliche Einsatzzwecke ausgerüstet werden kann.

Diese Aufgabe wird erfindungsgemäß durch die kennzeichnenden Merkmale des Anspruches 1 gelöst. Infolge dieser Maßnahmen kann auf einfachste Weise durch den einfachen Austausch der Unterteile mit verschiedener Anzahl von Abzweigen der Verteilerkopf auf die jeweils vorgesehenen Einsatzbedingungen und die gewünschte Reihenanzahl von Säelementen abgestimmt werden. Dadurch, daß das Deckelelement als nach unten offene halbkugelähnliches Element ausgebildet ist, ergibt sich eine einfache Ausgestaltung des Deckelelementes, welches sehr strömungsgünstig ist. Um eine strömungsgünstige Umlenkung und Verteilung des von der Zuführleitung dem Verteilerkopf zugeführten Materials auf die einzelnen Abzweige zu erreichen, ist es sinnvoll, daß in dem Verteilerkopf ein Füllelement angeordnet ist.

In einfacher Weise lassen sich Unterteile mit einer verschiedenen Anzahl von Abzweigungen dadurch realisieren, daß das Unterteil aus einer Blechplatte besteht, wobei die Durchbrüche für die Abzweige vorzugsweise auf einer CNC gesteuerten Werkzeugmaschine in die Platte eingebracht sind, und daß die Abzweige im Bereich der Durchbrüche angeschweißt und eingeclipst sind. Infolge dieser Maßnahme können die verschiedenen Unterteile ohne großen Werkzeugaufwand in einfachster Weise hergestellt werden. Diese Grundplatte ermöglicht aufgrund ihrer Herstellung einen unterschiedlichen Anschlußdurchmesser von Zuführrohren mit unterschiedlichen Durchmessern. Auch ist die Anzahl der Abgänge und der Durchmesser der Zuführleitungen in dem Unterteil variierbar. Die Anzahl der Abzweige und deren Durchmesser sowie der Durchmesser der Zuführleitungen müssen in einem bestimmten Verhältnis zueinander stehen. Desweiteren ermöglicht die erfindungsgemäßen Maßnahmen, daß man bei der Wahl der Zugangsleitung und der Abgangsleitung flexibel bei einem möglichst geringen Werkzeugaufwand bleibt. Durch die erfindungsgemäße Grundplatte hat man sehr viele Variationsmöglichkeiten in kostengünstiger Weise. Auch die Zugleitung sowie die Abzweige können leicht befestigt werden.

Das Deckelelement ist rotationssymmetrisch und konkav gewölbt ausgebildet. Es ist auch möglich, daß Deckelelement als platt gedrückte Halbkugel auszubilden.

Desweiteren ist vorgesehen, daß in dem Verteilerkopf eine integrierte Verschließeinrichtung für eine bestimmte Anzahl der Abzweige angeordnet ist. Hierdurch läßt sich in einfacher Weise eine Fahrgassenschaltung realisieren. Auch kann hierdurch in einfacher Weise eine Teilbreitenschaltung realisiert werden, in dem ein Teil der Zuleitungen abgeschaltet wird.

Hierbei kann in einer bevorzugten Ausführungsform vorgesehen sein, daß die Verschließeinrichtung als Teilbreitenschaltung ausgebildet ist, mit welcher jeder zweite Abzweig verschließbar ist, wobei gleichzeitig über die Dosiereinrichtung die zudosierte Menge reduzierbar ist.

In einer weiteren Ausführungsform ist vorgesehen, daß gleichzeitig an einem Verteilerkopf eine Fahrgassenschaltung und eine Teilbreitenschaltung vorgesehen ist, wobei jeweils für die Fahrgassenschaltung und die Teilbreitenschaltung eine Steuerscheibe vorhanden ist, die unabhängig voneinander mittels einer Fernbedienungseinrichtung betätigbar sind.

Mittels der Steuerscheiben lassen sich Verschlußelemente betätigen, welche die Abzweige verschließen. In einer Ausführungsform ist vorgesehen, daß die Verschlußelemente als Schieber ausgebildet sind. Diese Schieber können dann mittels der Steuerscheiben in den Verteilerraum oberhalb der zu verschließenden Abzweige geschoben werden, so daß die den Abzweig in gewünschter Weise absprerren. Hierbei hat sich als vorteilhaft herausgestellt, daß die Schieber auf ihrer oberen Seite dachförmig mit seitlich schräg nach unten abfallenden Flächen ausgebildet sind. Hierdurch wird erreicht, daß die auf die Schieber aufprallenden Materialpartikel seitlich abgelenkt werden und über eine Anzahl von Abzweigen verteilt werden, so daß verhindert wird, daß das gesamte Material, welches dem verschlossenen Abzweig an sich zugeleitet werden soll, den seitlich unmittelbar neben dem Abzweig liegenden Abzweigen verteilt wird, sondern durch die seitlichen Bewegungskomponenten auf eine größere Anzahl von Abzweigen verteilt wird.

Weiterhin ist in einer Ausführungsform vorgesehen, daß die Schieber zusätzlich teilweise die unmittelbar neben dem abgedeckten Abzweig liegende Nachbarabzweige abdecken. Hierdurch wird gewährleistet, daß die ansich dem abgedeckten Abzweig zugeführte Materialmenge nicht in zu großen Mengen den unmittelbar neben dem abgedeckten Abzweig liedende Nachbarabzweig zugeführt, sondern auf weitere Abzweige zugeleitet wird. Hierbei kann die Abdeckung der Nachbarabzweige etwa 10-50% deren Fläche betragen.

Desweiteren ist vorgesehen, daß die Schieber im Bereich des Verteilerkopfes außerhalb des Verteilerraumes mit einem Schaumstoff, beispielsweise einem Polyurethan-Schaum gegenüber dem Verteilerraum abgedichtet sind. Infolge dieser Maßnahme wird in äußerst einfacher Weise eine Abdichtung der inneren Verteilerwand gegenüber den Schiebern erreicht. Aufgrund der Eigenschaften des Polyurethan-Schaumes bilden sich die Schiebeschlitze für die Schieber selbst aus.

Die Führung der Schieber der Schließeinrichtung läßt sich dadurch verbessern, daß die Schieber in tunnelartigen Führungselementen angeordnet sind. Infolge dieser Maßnahmen wird auch unter schwierigsten Einsatzbedingungen, insbesondere wenn Verunreinigungen zwischen Schieber und der Grundplatte gelangen sollten, immer eine sichere Führung der Schieber erreicht. Die Schieber können so in jedem Falle sicher die abzudeckenden Auslässe des Verteilerkopfes abdecken. Damit die Schieber die tunnelartigen Führungselemente nicht anheben können, ist vorgesehen, daß die Führungselemente mittels Befestigungselementen an dem Unterteil befestigt sind.

Um eine ausreichende Abdichtung zu erreichen, ist vorgesehen, daß die Führungselemente bis an die Wand des inneren Deckelelementes heranragen.

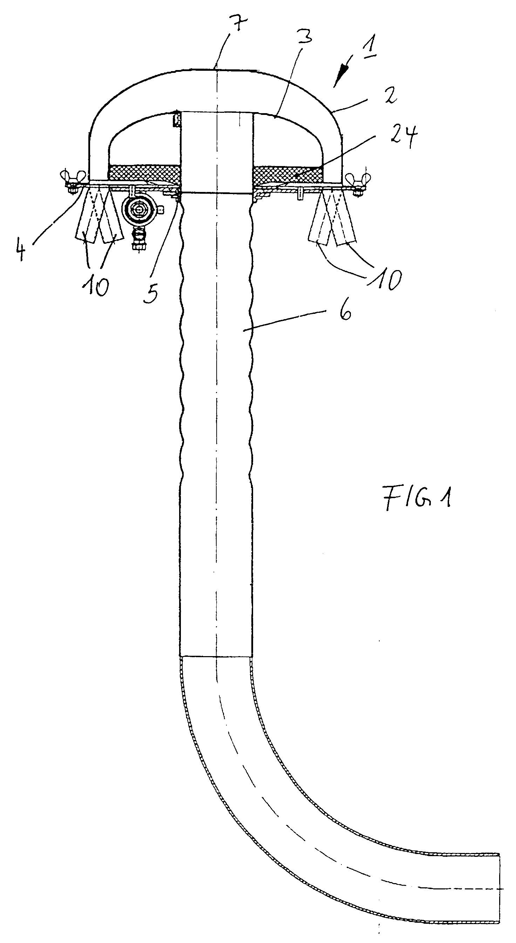

Weitere Einzelheiten der Erfindung sind den übrigen Unteransprüchen, der Beispielsbeschreibung und den Zeichnungen zu entnehmen. Hierbei zeigen
- Fig.1: einen Verteilerkopf mit Steigrohr für eine pneumatische Sämaschine in Prinzipdarstellung,

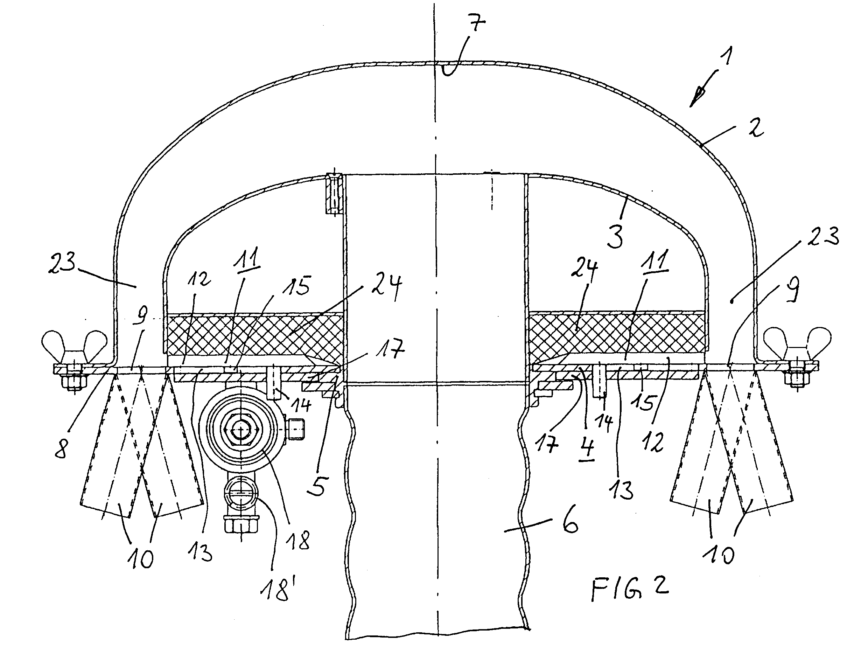

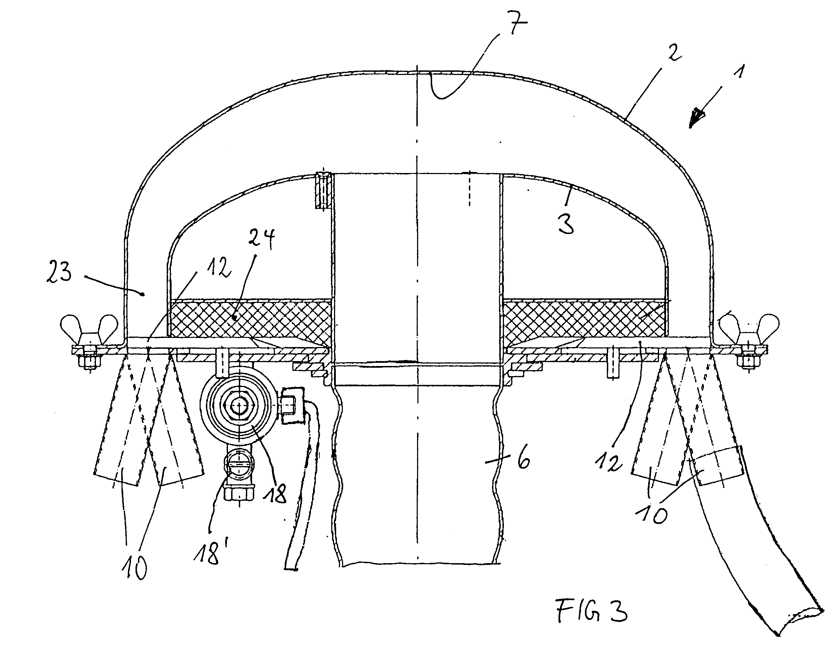

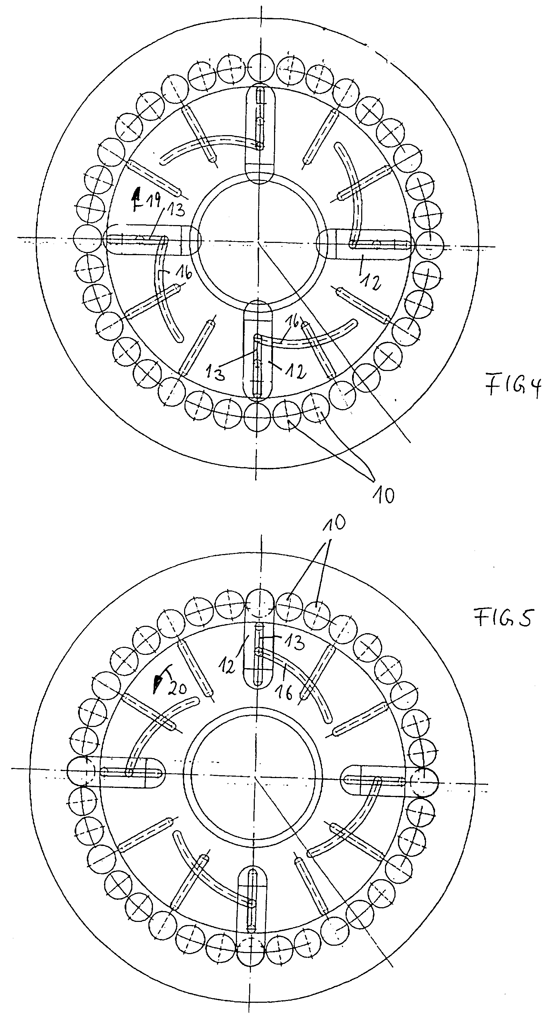

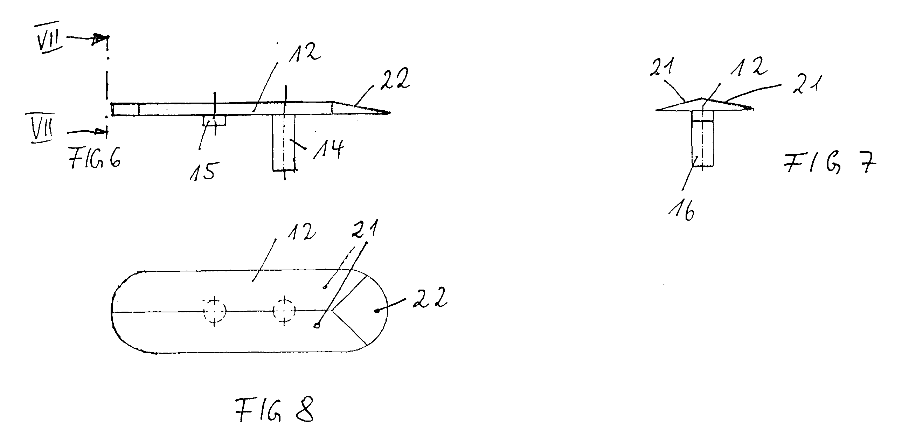

- Fig.2: den Verteilerkopf gemäß Fig.1 in vergrößertem Maßstab,
- Fig.3: den Verteilerkopf nach Fig.2, wobei jedoch die Verschlußelemente der Verschließeinrichtung in Verschließstellung sich befinden,
- Fig.4: den Verteilerkopf nach Fig.2 in der Ansicht IV-IV,
- Fig.5: den Verteilerkopf gemäß Fig.3 in der gleichen Ansicht wie Fig.4,
- Fig.6: einen Schieber in Seitenansicht,
- Fig.7: den Schieber in der Ansicht VII-VII,
- Fig.8: den Schieber in der Draufsicht,
- Fig.9: eine weitere Anordung einer Verschließeinrichtung in der Darstellungsweise gemäß Fig.4,
- Fig.10: den Verteilerkopf gemäß Fig.6 entsprechend der Darstellung nach Fig.5,
- Fig.11: den Verteilerkopf nach Fig.5, jedoch mit anders ausgebildeten Schiebern,
- Fig.12: den Verteilerkopf mit Steigrohr für eine pneumatische Sämaschine im Schnitt und in Prinzipdarstellung,

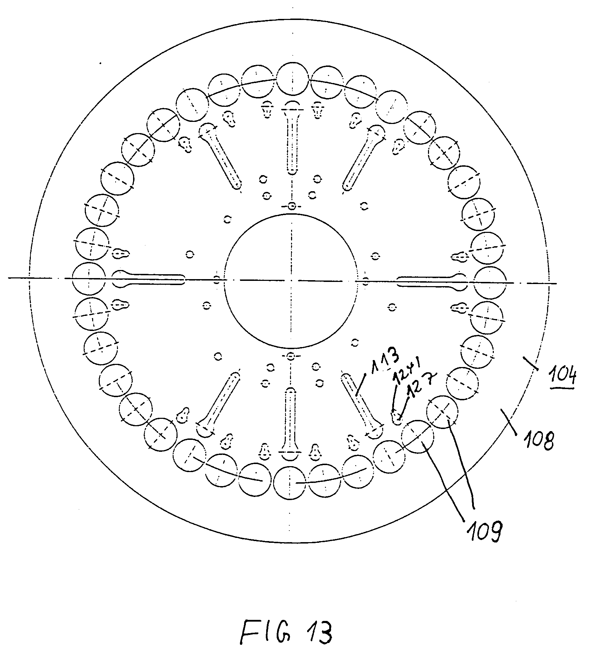

- Fig.13: das Unterteil in der Draufsicht in der Ansicht II-II,

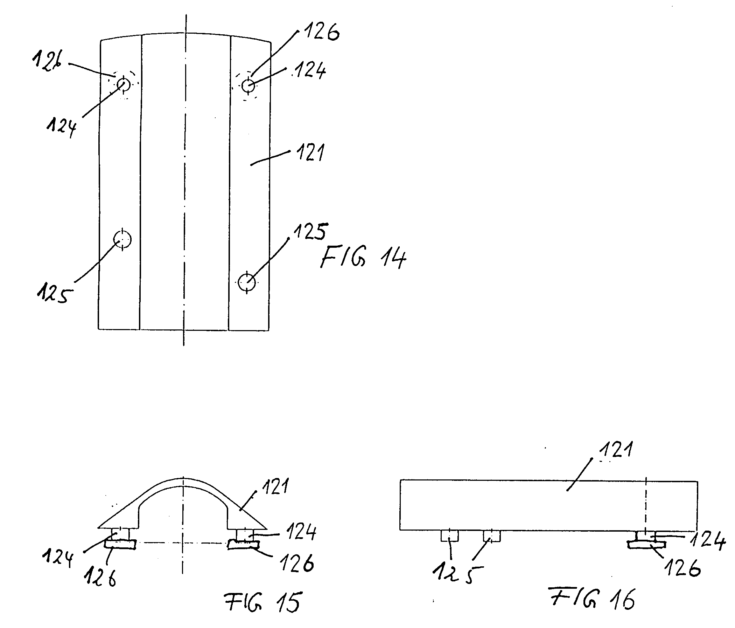

- Fig.14: das tunnelartige Führungselement in der Draufsicht und in einem anderen Maßstab,
- Fig.15: das tunnelartige Führungselement in der Vorderansicht und
- Fig.16: das tunnelartige Führungselement in Seitenansicht.

Der Verteilerkopf 1 ist für eine pneumatische Sämaschine vorgesehen. Der Verteilerkopf 1 ist mit einem äußeren Deckelelement 2, inneren Deckelelement 3 und einem Unterteil 4 ausgestattet. Das Unterteil 4 weist ein Verbindungselement 5 zur Anbringung auf dem teilweise als Wellrohr ausgebildetem Steigrohr 6 auf. Vor dem Steigrohr 6 kann ein bogenförmiges Rohr angeordnet sein, welches an eine nicht dargestellte Dosiereinrichtung und an einem nicht dargestellten Gebläse angeschlossen ist. Über der Dosiereinrichtung wird dem Steigrohr 6 und dem Verteilerkopf 1 in Verbindung mit dem Luftstrom in bekannter und daher nicht näher dargestellter Weise Saatgut oder Dünger aus einem Vorratsbehälter zugeführt.

Das Deckelelement 2 ist im oberen Bereich als Prallfläche 7 ausgebildet. Das Unterteil 4 des Verteilerkopfes 1 besteht aus einer als Blechplatte ausgebildeten Platte 8 mit Durchbrüchen 9, an die sich die Abzeige 10 anschließen. Die Abzweige 10 sind an der Belchplatte 8 angeschweißt. Sie können jedoch auch in die Durchbrüche 9 eingeklipst bzw. an diese angeklipst werden. Die Durchbrüche 9 für die Abzweige 10 werden in bevorzugter Weise auf einer CNC-gesteuerten oder anderen Werkzeugmaschine in die Platte 8 eingebracht. Die Durchmesser der Durchbrüche 9 sind an die Anzahl der Abzweige 10 angepaßt. Die Blechplatte 8 ist an dem Flanschelement 5, welches an dem Steigrohr 6 bzw. dessen Verlängerung befestigt ist, befestigt.

Das Deckelelement 2 besitzt eine nach unten offene, halbkugelähnliche Form, die im Prallbereich 7 abgeflacht ist. Das Deckelelement 2 ist rotationssymmetrisch und konkav gewölbt ausgebildet und als plattgedrückte Halbkugel ausgeformt. Im Inneren des Deckelelementes 2 ist ein weiteres inneres Deckelelement 3 angeordnet.

Die Abzweige 10 sind nach unten gerichtet, wobei sie entweder senkrecht nach unten oder in einem Winkelbereich zwischen 0-60 Grad von der Senkrechten nach unten abweichend angeordnet sein können.

Je nach Anzahl der anzuschließenden Säschare und entsprechend der Arbeitsbreite der Drillmaschine und des Scharabstandes, wird an dem Verteilerkopf 1 das entsprechende Unterteil 4 mit der erforderlichen Anzahl von Abzweigungen 10 angebracht.

Hierzu sind für den Verteilerkopf 1 eine Anzahl verschiedener Unterteile 4 jeweils mit einer verschiedenen Anzahl von Abzweigungen vorgesehen, so daß der Verteilerkopf durch das entsprechende Unterteil 4 mit der erforderlichen Anzahl von Abzweigungen 10 in einfacher und kostengünstiger Weise auszurüsten ist.

Die verschiedenen Unterteile (mit der verschiedenen Anzahl von Durchbrüchen und Abzweigen) werden in vorbeschriebener Weise hergestellt und dann zur Herstellung der Verteilerköpfe mit den jeweils gewünschten Abzweigungen dem Verteilerkopf zugeordnet. Somit lassen sich in kostengünstiger und rationeller Weise verschiedene Verteilerköpfe herstellen.

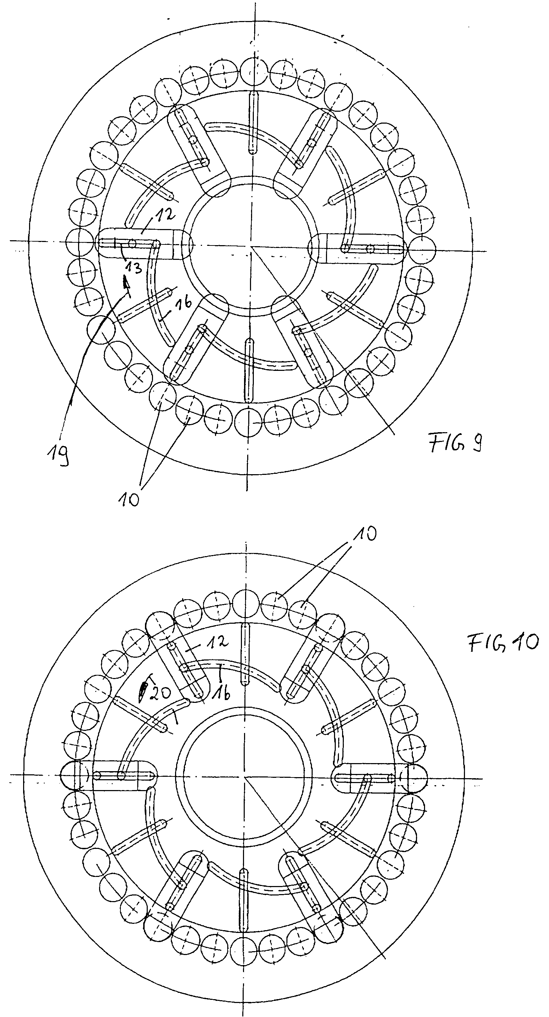

Dem Verteilerkopf 1 ist eine integrierte Verschließeinrichtung 11 für das Verschließen einer bestimmten Anzahl der Abzweige 10 zugeordnet. Diese Verschließeinrichtung 11 ist als Fahrgassenschaltung ausgebildet und weist eine entsprechend der gewünschten Anzahl der abzuschaltenden Säschare entsprechende Anzahl von Verschlußelementen, die als Schieber 12 ausgebildet sind, auf. Diese Schieber 12 werden in den in der Bodenplatte 8 radial sich erstreckenden Führungen 13 mittels der an den Schiebern 12 angeordneten und als Bolzen 14 und 15 ausgebildeten Führungselementen geführt. Der eine Bolzen 14 ist länger ausgebildet und greift zusätzlich in die Kurvenführung 16, die sich in der Steuerscheibe 17 befinden. Die Steuerscheibe 17 ist unterhalb der Bodenplatte 8 drehbar an dem Flanschelement 5 des Verteilerkopfes 1 gelagert ist. Mittels des als Hydraulikzylinder ausgebildeten Betätigungselementes 18 läßt sich die Scheibe 17 in Pfeilrichtung 19 verdrehen, so daß die Schieber 12 aus der in Fig.4 dargestellten Position in die in Fig.5 dargestellte Position zu schieben sind. Mittels einer dem Hydraulikzylinder 18 zugeordneten Rückholfeder 18' kann nach dem Drucklosschalten des Hydraulikzylinders 18 die Scheibe 17 wieder in Pfeilrichtung 20 zurückgezogen werden, so daß die Schieber 12 in die in Fig.4 dargestellte Position zurückgeschoben werden. Die Schieber 12 können auf ihrer Außenseite eine an die Innenkrümmung des Deckelelementes 2 angepaßte Rundung aufweisen.

Die Schieber 12 sind auf ihrer angeströmten Seite dachförmig ausgebildet, mit seitlich schräg abfallenden Flächen 21. In der eingebauten Lage gemäß Ausführungsbeispiel sind die Schieber 12 auf ihrer oberen Seite dachförmig ausgebildet, wobei die Flächen 21 nach unten abfallen. Auf der inneren Seite weist der Schieber 12 auf seiner Oberfläche eine nach innen abfallende Fläche 22 auf. Oberhalb der Schieber 12 und im Inneren des inneren Deckelelementes 13 ist im Bereich des Verteilerkopfes 1 außerhalb des Verteilerraumes 23 die Schaumstoffplatte 24, die aus einem Polyurethan-Schaum besteht, angeordnet, die die Schieber 12 gegen den Verteilerraum 23 abdichtet. Der Verschieberraum 24 unterhalb des Polyurethan-Schaumes 24 wird durch die Schieber 12 selbst ausgeformt.

In nicht dargestellter Weise ist es auch möglich, weitere Schieber 12 in dem Verteilerkopf 1 mit einer zusätzlichen, jedoch nicht dargestellten Steuerscheibe anzuordnen, so daß jeder zweite Abzweig 10 verschließbar ist, wobei dann jedoch gleichzeitig über die Dosiereinrichtung die dosierte Menge Saatgut zu reduzieren ist. Hierdurch wird eine Teilbreitenschaltung erreicht. Die beiden Steuerscheiben sind unabhängig mittels Ferndbedienungseinrichtungen betätigbar.

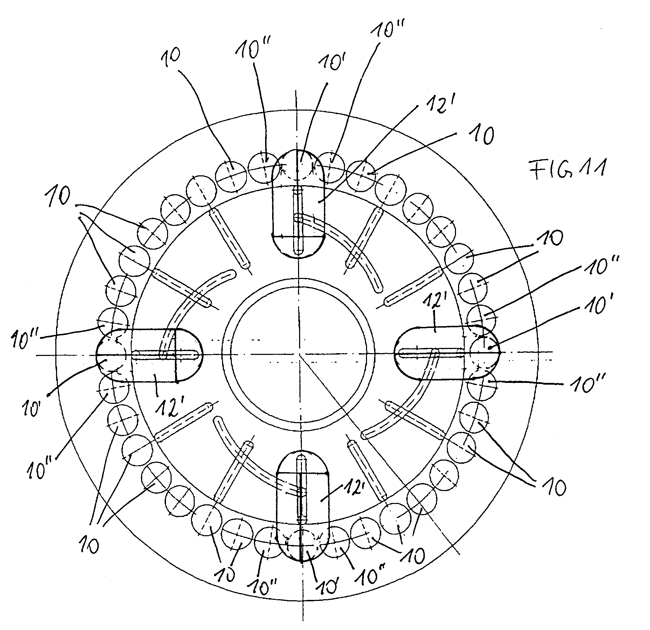

Bei dem Ausführungsbeispiel gemäß den Fig.9 und 10 werden je Fahrspur drei Säschare verschlossen. Hierzu ist es dann erforderlich neben der Umsetzung der Schieber 12 zusätzliche Schieber 12 und eine andere Steuerscheibe an dem Verteilerkopf 1 zu montieren.

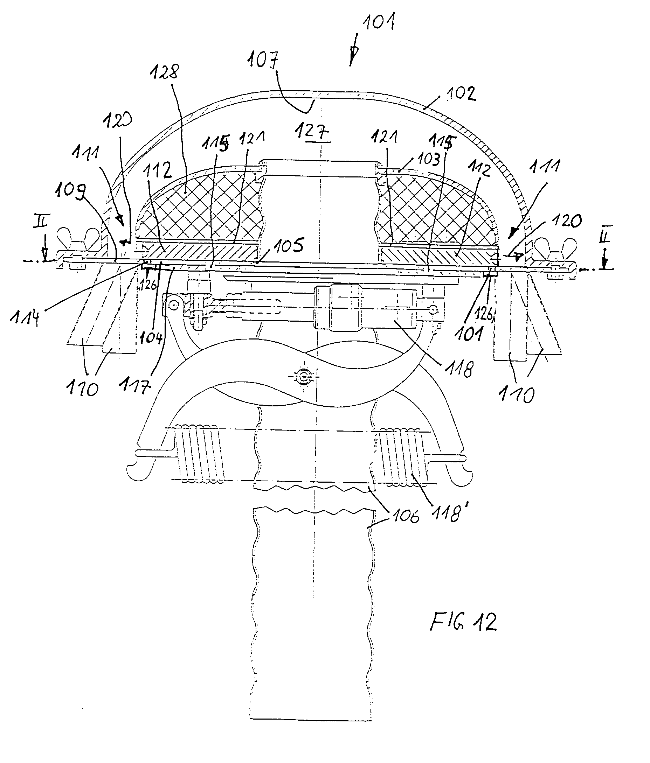

Die Fig.11 zeigt im Vergleich zu der Fig.5 breiter ausgebildete Schieber 12', die teilweise neben dem völlig abgesperrten Abzweig 10 auch die unmittelbar benachbarten Abzweige 10'' teilweise abdecken. Auch diese Schieber 12' weisen jeweils auf der angeströmten Seite eine dachförmige Form auf, so daß die aufgeblasenen Materialpartikel eine seitliche Bewegungskomponente bekommen. Durch die teilweise Abdeckung der unmittelbaren Nachbarabzweige 10'' des völlig abgedeckten Abzweiges 10' wird eine unerwünschte Mehranhäufung von Material in zu großer Größenordnung verhindert. Es wird somit also eine Vergleichmäßigung der Aufteilung des an sich dem abgesperrten Abzweig 10' zugeführten Saatgutes auf mehrere Abzweige 10'' und 10 neben den abgesperrten Abzweig 10' in einfacher und unerwarteter Weise erreicht.

Der Verteilerkopf 101 gemäß Fig.12 ist für eine pneumatische Sämaschine vorgesehen. Der Verteilerkopf 101 ist mit einem äußeren Deckelelement 102, dem inneren Deckelelement 103 und einem Unterteil 104 ausgestattet. Das Unterteil 4 weist ein Verbindungselement 105 zur Anbringung auf dem teilweise als Wellrohr ausgebildetem Steigrohr 106 auf. Vor dem Steigrohr 106 kann ein bogenförmiges Rohr angeordnet sein, welches an eine nicht dargestellte Dosiereinrichtung und an einem nicht dargestellten Gebläse angeschlossen ist. Über einer Dosiereinrichtung wird dem Steigrohr 106 und dem Verteilerkopf 101 in Verbindung mit dem Luftstrom in bekannter und daher nicht näher dargestellter Weise Saatgut oder Dünger aus einem Vorratsbehälter zugeführt.

Das Deckelelement 102 ist im oberen Bereich als Prallfläche 107 ausgebildet. Das Unterteil 104 des Verteilerkopfes 101 besteht aus einer als Blechplatte ausgebildeten Platte 108 mit Durchbrüchen 109, an die sich die Abzweige 110 anschließen. Die Abzweige 110 sind an der Blechplatte 108 angeschweißt. Sie können jedoch auch in die Durchbrüche 109 eingeklipst bzw. an diese angeklipst werden. Die Durchbrüche 109 für die Abzweige 110 werden in bevorzugter Weise auf einer CNC-gesteuerten oder anderen Werkzeugmaschine in die Platte 108 eingebracht. Die Durchmesser der Durchbrüche 109 sind an die Anzahl der Abzweige 110 angepaßt. Die Blechplatte 108 ist an dem Flanschelement 105, welches an dem Steigrohr 106 bzw. dessen Verlängerung befestigt ist, befestigt.

Das Deckelelement 102 besitzt eine nach unten offene, halbkugelähnliche Form, die im Prallbereich 107 abgeflacht ist. Das Deckelelement 102 ist rotationssymmetrisch und konkav gewölbt ausgebildet und als plattgedrückte Halbkugel ausgeformt. Im Inneren des Deckelelementes 102 ist ein weiteres inneres Deckelelement 103 angeordnet.

Die Abzweige 110 sind nach unten gerichtet, wobei sie entweder senkrecht nach unten oder in einem Winkelbereich zwischen 0-60 Grad von der Senkrechten nach unten abweichend angeordnet sein können.

Je nach Anzahl der anzuschließenden Säschare und entsprechend der Arbeitsbreite der Drillmaschine und des Scharabstandes, wird an dem Verteilerkopf 101 das entsprechende Unterteil 104 mit der erforderlichen Anzahl von Abzweigungen 110 angebracht.

Hierzu sind für den Verteilerkopf 101 eine Anzahl verschiedener Unterteile 4 jeweils mit einer verschiedenen Anzahl von Abzweigungen vorgesehen, so daß der Verteilerkopf durch das entsprechende Unterteil 104 mit der erforderlichen Anzahl von Abzweigungen 110 in einfacher und kostengünstiger Weise auszurüsten ist.

Die verschiedenen Unterteile (mit der verschiedenen Anzahl von Durchbrüchen und Abzweigen) werden in vorbeschriebener Weise hergestellt und dann zur Herstellung der Verteilerköpfe mit den jeweils gewünschten Abzweigungen dem Verteilerkopf zugeordnet. Somit lassen sich in kostengünstiger und rationeller Weise verschiedene Verteilerköpfe herstellen.

Dem Verteilerkopf 101 ist eine integrierte Verschließeinrichtung 111 für das Verschließen einer bestimmten Anzahl der Abzweige 110 zugeordnet. Diese Verschließeinrichtung 111 ist als Fahrgassenschaltung ausgebildet und weist eine entsprechend der gewünschten Anzahl der abzuschaltenden Säschare entsprechende Anzahl von Verschlußelementen, die als Schieber 112 ausgebildet sind, auf. Diese Schieber 112 werden in den in der Bodenplatte 108 radial sich erstreckenden Führungen 113 mittels der an den Schiebern 112 angeordneten und als Bolzen 114 und 115 ausgebildeten Führungselementen geführt. Der eine Bolzen 114 ist länger ausgebildet und greift zusätzlich in einer Kurvenführung, wie im Hauptpatent beschrieben, die sich in der Steuerscheibe 117 befinden. Die Steuerscheibe 117 ist unterhalb der Bodenplatte 108 drehbar an dem Flanschelement 105 des Verteilerkopfes 101 gelagert ist. Mittels des als Hydraulikzylinder ausgebildeten Betätigungselementes 118 läßt sich die Scheibe 117 verdrehen, so daß die Schieber 112 in Pfeilrichtung 120 zu verschieben sind. Mittels einer dem Hydraulikzylinder 118 zugeordneten Rückholfeder 118' wird nach dem Drucklosschalten des Hydraulikzylinders 118 die Scheibe 117 zurückgezogen werden, so daß die Schieber 112 in die dargestellte Position zurückgezogen werden. Die Schieber 112 können auf ihrer Außenseite eine an die Innenkrümmung des Deckelelementes 102 angepaßte Rundung aufweisen.

Die Schieber 112 sind in tunnelartigen Führungselementen 121 angeordnet. Die tunnelartigen Führungselemente 121 weisen die Bolzen 122 und 123 auf, die in den der Platte angeordneten Bohrungen 124 und 125 eingreifen. Die auf der Außenseite angeordneten Bolzen 122 weisen an ihrem freien Ende eine Verbreiterung 126 auf, der als Kopf ausgebildet ist, auf. Die Öffnungen 124' in der Platte 108 weisen auf den Außenseiten ebenfalls größere Ausschnitte 127 auf, die an den Außendurchmesser der Verbreiterung 126 der Bolzen 122 angepaßt sind. Die Köpfe 126 werden dann, nachdem sie durch die Öffnungen 127 eingefädelt sind, mit den Führungselementen 121 nach hinten geschoben. Somit sind durch diese Bolzen 122 mit den Köpfen die Führungselemente 121 an dem Unterteil 108 befestigt. Diese Bolzen 122 mit den Köpfen 126 bilden die Befestigungselemente. Die Führungselemente 121 ragen bis an die Wand des inneren Deckelelementes 103 heran, wie die Fig.12 zeigt. Zwischen dem inneren Deckelelement 103 und dem Unterteil 104 ist außerhalb des Verteilerraumes 127 die Schaumstoffplatte 128 angeordnet, die die Schieber 112, die Führungselemente 121 gegen den Verteilerraum 127 abdichtet. Weiterhin weist der vordere Bolzen 114, der an dem Schieber 112 befestigt ist, ebenfalls eine Verbreiterung 126 auf.

## Patentansprüche

1. Verteilerkopf für eine pneumatische Sämaschine mit einem äußeren Deckelelement und einem Unterteil zur Anbringung auf einem Steigrohr, dem durch eine Fördereinrichtung Saatgut aus einem Behälter zugeführt wird, um es mittels Druckluft über eine von dem Scheitelteil der inneren Fläche des äußeren Deckelelementes gebildeten Prallfläche durch Prallverteilung auf Abzweige zu verteilen, an die zu Saatausbringelementen führende Leitungen anschließbar sind, dadurch gekennzeichnet, daß die Abzweige (10, 10', 10'') in dem Unterteil (4) angeordnet sind, daß für den Verteilerkopf (1) eine Anzahl verschiedener Unterteile (4) jeweils mit einer verschiedenen Anzahl von Abzweigungen (10, 10', 10'') vorgesehen sind, daß das äußere Deckelelement (2) als nach unten offene, jedoch von dem Unterteil (4) verschlossene als halbkugelähnliches Element ausgebildet ist, daß in dem Innenraum des äußeren Deckelelementes (2) ein Füllstück (3) beabstandet zu dem äußeren Deckelelement (2) angeordnet ist, daß durch den Abstand zwischen dem äußeren Deckelelement (2) und dem Füllstück (3) der Verteilerraum für die Aufteilung des Saatgutes auf die Abzweige gebildet wird.

2. Verteilerkopf nach Anspruch 1, dadurch gekennzeichnet, daß das Unterteil (4) auswechselbar an dem Verteilerkopf (1) angeordnet ist.

3. Verteilerkopf nach einem oder mehreren der vorstehend genannten Ansprüche, dadurch gekennzeichnet, daß das Unterteil (4) aus einer Blechplatte (8) besteht, wobei die Durchbrüche (9) für die Abzweige (10, 10', 10'') vorzugsweise auf einer CNC-gesteuerten Werkzeugmaschine in die Platte (8) eingebracht sind, und daß die Abzweige (10, 10', 10'') im Bereich der Durchbrüche (9) angeschweißt oder eingeclipst sind.

4. Verteilerkopf nach einem oder mehreren der vorstehend genannten Ansprüche, dadurch gekennzeichnet, daß die Durchmesser der Durchbrüche (9) an die Anzahl der Abzweige (10) angepaßt ausgebildet sind.

5. Verteilerkopf nach einem oder mehreren der vorstehend genannten Ansprüche, dadurch gekennzeichnet, daß die Abzweige (10) nach unten gerichtet sind.

6. Verteilerkopf nach einem oder mehreren der vorstehend genannten Ansprüche, dadurch gekennzeichnet, daß die Abzweige (10) senkrecht nach unten gerichtet sind.

7. Verteilerkopf nach einem oder mehreren der vorstehend genannten Ansprüche, dadurch gekennzeichnet, daß die Abzweige (10) in einem Winkelbereich zwischen 0-60 Grad von der Senkrechten abweichend nach unten gerichtet sind.

8. Verteilerkopf nach Anspruch 1, dadurch gekennzeichnet, daß in dem Verteilerkopf (1) eine integrierte Verschließeinrichtung (11) für eine bestimmte Anzahl der Abzweige (10') angeordnet ist.

9. Verteilerkopf nach einem oder mehreren der vorstehend genannten Ansprüche, dadurch gekennzeichnet, daß die Verschließeinrichtung (11) als Fahrgassenschalteinrichtung ausgebildet ist.

10. Verteilerkopf nach einem oder mehreren der vorstehend genannten Ansprüche, dadurch gekennzeichnet, daß die Verschließeinrichtung (11) als Teilbreitenschaltung ausgebildet ist, mit welcher jeder zweite Abzweig verschließbar ist, wobei gleichzeitig über die Dosiereinrichtung die zudosierte Menge reduzierbar ist.

11. Verteilerkopf nach einem oder mehreren der vorstehend genannten Ansprüche, dadurch gekennzeichnet, daß in dem Verteilerkopf (1) die die Abzweige (10') verschließenden Verschlußelemente (12, 12') der Verschlußeinrichtung (11) angeordnet sind.

12. Verteilerkopf nach einem oder mehreren der vorstehend genannten Ansprüche, dadurch gekennzeichnet, daß die Steuerscheiben (17) für die Fahrgassenschaltung und die Teilbreitenschaltung unabhängig voneinander mittels einer Fernbedienungseinrichtung betätigbar sind.

13. Verteilerkopf nach einem oder mehreren der vorstehend genannten Ansprüche, dadurch gekennzeichnet, daß die Verschlußelemente als Schieber (12, 12') ausgebildet sind.

14. Verteilerkopf nach einem oder mehreren der vorstehend genannten Ansprüche, dadurch gekennzeichnet, daß die Schieber (12, 12') im Bereich des Verteilerkopfes (1) außerhalb des Verteilerraumes (23) mit einem Schaumstoff, beispielsweise einem Polyurethan-Schaum (24) gegen den Verteilerraum (23) abgedichtet sind.

15. Verteilerkopf nach Anspruch 13, dadurch gekennzeichnet, daß die Schieber (112) in tunnelartigen Führungselementen (121) angeordnet sind.

16. Verteilerkopf nach Anspruch 15, dadurch gekennzeichnet, daß die Führungselemente (121) mittels Befestigungselementen (126) an dem Unterteil (104) befestigt sind.

17. Verteilerkopf nach einem oder mehreren der vorstehenden Ansprüche, dadurch gekennzeichnet, daß die Führungselemente (121) bis an die Wand des inneren Deckelelementes (103) heranragen.

## Claims

1. Distributor head for a pneumatic sowing machine, having an outer cover means and a lower portion for mounting on a feedpipe, to which seed is supplied from a container by a conveying arrangement, in order to distribute it by means of compressed air over a deflecting face, which is formed from the crown portion of the inner face of the outer cover means, by deflection distribution, to branches to which lines leading to the seed distributing means are connectable, characterised in that the branches (10, 10', 10'') are disposed in the lower portion (4), in that a number of different lower portions (4), each having a different number of branching-off portions (10, 10', 10''), are provided for the distributor head (1), in that the outer cover means (2) is configured as a dome-shaped element which is downwardly open but closed from the lower portion (4), in that a filler (3) is disposed in the interior of the outer cover means (2) at a spacing from the outer cover means (2), and in that the distributor chamber for distributing the seed to the branches is formed by the spacing between the outer cover means (2) and the filler (3).

2. Distributor head according to claim 1, characterised in that the lower portion (4) is interchangeably disposed on the distributor head (1).

3. Distributor head according to one or more of the above-mentioned claims, characterised in that the lower portion (4) comprises a sheet metal plate (8), the openings (9) for the branches (10, 10', 10'') being made in the plate (8) preferably on a CNC-controlled machine tool, and in that the branches (10, 10', 10'') are welded or clipped in position in the region of the openings (9).

4. Distributor head according to one or more of the above-mentioned claims, characterised in that the diameters of the openings (9) are configured to correspond to the number of the branches (10).

5. Distributor head according to one or more of the above-mentioned claims, characterised in that the branches (10) are directed downwardly.

6. Distributor head according to one or more of the above-mentioned claims, characterised in that the branches (10) are directed vertically downwardly.

7. Distributor head according to one or more of the above-mentioned claims, characterised in that the branches (10) are directed downwardly so as to differ in an angular range between 0-60 degrees from the vertical.

8. Distributor head according to claim 1, characterised in that an incorporated closing arrangement (11) for a specific number of branches (10') is disposed in the distributor head (1).

9. Distributor head according to one or more of the above-mentioned claims, characterised in that the closing arrangement (11) is configured as a tramline switching arrangement.

10. Distributor head according to one or more of the above-mentioned claims, characterised in that the closing arrangement (11) is configured as a part-width switching means, with which every second branch is closable, the additionally metred quantity being simultaneously reducible via the metering arrangement.

11. Distributor head according to one or more of the above-mentioned claims, characterised in that the closing means (12, 12') of the closing arrangement (11), which means close the branches (10'), are disposed in the distributor head (1).

12. Distributor head according to one or more of the above-mentioned claims, characterised in that the control discs (17) for the tramline switching arrangement and the part-width switching means are actuatable independently of each other by means of a remote control arrangement.

13. Distributor head according to one or more of the above-mentioned claims, characterised in that the closing means are configured as slides (12, 12').

14. Distributor head according to one or more of the above-mentioned claims, characterised in that the slides (12, 12') are sealed from the distributor chamber (23) with a foam material for example a polyurethane foam (24), in the region of the distributor head (1) externally of the distributor chamber (23).

15. Distributor head according to claim 13, characterised in that the slides (112) are disposed in tunnel-like guide means (121).

16. Distributor head according to claim 15, characterised in that the guide means (121) are secured on the lower portion (104) by means of securing means (126).

17. Distributor head according to one or more of the preceding claims, characterised in that the guide means (121) protrude as far as the wall of the inner cover means (103).

## Revendications

1. Tête distributrice pour semoir pneumatique comprenant un élément de recouvrement extérieur et une partie inférieure destinée a être reliée a un tube montant recevant les semences d'un réservoir par une installation de transfert pour répartir avec de l'air comprimé par l'intermédiaire d'une surface de rebondissement formée par la surface intérieure au niveau du sommet de l'élément de recouvrement extérieur, vers des embranchements auxquels sont reliées les conduites aboutissant aux éléments distributeurs de semences,
caractérisée en ce que
les embranchements (10, 10', 10'') sont prévus dans la partie inférieure (4),
- a la tête distributrice (1) est associé un nombre de parties inférieures (4), différent ayant chaque fois un nombre différent d'embranchements (10, 10', 10''),
- l'élément de recouvrement extérieur (2) est ouvert vers le bas, présentant une forme de demi-sphère fermée toutefois par la partie inférieure (4),
- a l'intérieur de l'élément de recouvrement extérieur (2), il est prévu une pièce de remplissage (3) située a une certaine distance de l'élément de recouvrement extérieur (2),
- la distance entre l'élément de recouvrement extérieur (2) et la pièce de remplissage (3) forme la chambre de distribution pour répartir la semence entre les embranchements.

2. Tête distributrice selon la revendication 1,
caractérisée en ce que
la partie inférieure (4) est montée de manière interchangeable sur la tête distributrice (1).

3. Tête distributrice selon une ou plusieurs des revendications précédentes,
caractérisée en ce que
la partie inférieure (4) est une plaque de tôle (8) munie de passage (9) pour les embranchements (10, 10', 10'') de préférence réalisés dans la plaque (8) réalisés par une machine-outil à commande numérique et,
- les embranchements (10, 10', 10'') sont soudés ou enclipsés dans la zone des passages (9).

4. Tête distributrice selon l'une quelconque des revendications précédentes,
caractérisée en ce que
le diamètre des passages (9) est adapté au nombre d'embranchements (10).

5. Tête distributrice selon l'une quelconque des revendications précédentes,
caractérisée en ce que
les embranchements (10) sont dirigés vers le bas.

6. Tête distributrice selon l'une quelconque des revendications précédentes,
caractérisée en ce que
les embranchements (10) sont dirigés verticalement vers le bas.

7. Tête distributrice selon l'une quelconque des revendications précédentes,
caractérisée en ce que
les embranchements (10) s'écartent vers le bas et font un angle compris entre 0 et 60° par rapport à la direction verticale.

8. Tête distributrice selon la revendication 1,
caractérisée par
une installation d'obturation (11) intégrée dans la tête distributrice (1) pour un nombre déterminé d'embranchements (10').

9. Tête distributrice selon l'une quelconque des revendications précédentes,
caractérisée en ce que
l'installation d'obturation (11) est une installation de commutation de voies de passage.

10. Tête distributrice selon l'une quelconque des revendications précédentes,
caractérisée en ce que
installation d'obturation (11) est constituée par un circuit de commutation de largeur partielle qui permet de fermer chaque second embranchement et réduire en même temps la quantité dosée par installation de dosage.

11. Tête distributrice selon l'une quelconque des revendications précédentes,
caractérisée en ce que
dans la tête distributrice (1), les éléments d'obturation (12, 12') qui ferment les embranchements (10') font partie de l'installation d'obturation (11).

12. Tête distributrice selon l'une quelconque des revendications précédentes,
caractérisée en ce que
les disques de commande (17) du circuit de commutation des voies de passage et du circuit de commutation de largeur partielle peuvent être actionnés indépendamment l'un de l'autre par une installation de télécommande.

13. Tête distributrice selon l'une quelconque des revendications précédentes,
caractérisée en ce que
les éléments d' obturation sont des tiroirs (12, 12').

14. Tête distributrice selon l'une quelconque des revendications précédentes,
caractérisée en ce que
les tiroirs (12, 12') sont séparés de manière étanche dans la zone de la tête distributrice (1) à l'extérieur de la chambre de répartition (23) vis-à-vis de cette chambre (23) par de la mousse, par exemple de la mousse de polyuréthanne (24).

15. Tête distributrice selon la revendication 13,
caractérisée en ce que
les tiroirs (112) sont logés dans des éléments de guidage (121) en forme de tunnel.

16. Tête distributrice selon la revendication 15,
caractérisée en ce que
les éléments de guidage (121) sont fixés à la partie inférieure (104) par des éléments de fixation (126).

17. Tête distributrice selon l'une quelconque des revendications précédentes,
caractérisée en ce que
les éléments de guidage (121) arrivent jusqu'à la paroi de l'élément de recouvrement intérieur (103).
